# EUROPÄISCHE PATENTSCHRIFT

(11) **EP 2 678 994 B1**
(45) Veröffentlichungstag und Bekanntmachung des Hinweises auf die Patenterteilung: **28.03.2018**
(21) Anmeldenummer: 12705287.6
(22) Anmeldetag: 21.02.2012
(51) Int. Cl.: H04L 29/08, B60W 50/00

(54) **VERFAHREN ZUM KONFIGURIEREN EINER STEUERVORRICHTUNG FÜR EIN KRAFTFAHRZEUG, COMPUTERPROGRAMM UND STEUERVORRICHTUNG**
METHOD FOR CONFIGURING A CONTROL APPARATUS FOR A MOTOR VEHICLE, COMPUTER PROGRAM AND CONTROL APPARATUS
PROCÉDÉ DE CONFIGURATION D'UN DISPOSITIF DE COMMANDE POUR UN VÉHICULE AUTOMOBILE, PROGRAMME D'ORDINATEUR ET DISPOSITIF DE COMMANDE

(30) Priorität: 23.02.2011 DE 102011012187
(43) Veröffentlichungstag der Anmeldung: 01.01.2014
(73) Patentinhaber: Continental Automotive GmbH, 30165 Hannover (DE)
(72) Erfinder: VOSSELER, Wilfried, 78199 Bräunlingen (DE)
(86) Internationale Anmeldenummer: PCT/EP2012/052891
(87) Internationale Veröffentlichungsnummer: WO 2012/113766

(56) Entgegenhaltungen:
- DE-A1- 10 044 319
- DE-A1- 10 129 921
- DE-A1- 10 334 536
- DE-A1-102005 047 555
- US-A- 6 076 622
- US-A1- 2007 142 977

## Beschreibung

Die Erfindung betrifft ein Verfahren zum Konfigurieren einer Steuervorrichtung für ein Kraftfahrzeug, ein Computerprogramm zum Konfigurieren der Steuervorrichtung und die Steuervorrichtung.

Insbesondere Hersteller von Aufbauten für Nutzfahrzeuge benötigen gegebenenfalls Zugriff auf einen Antriebsstrang des Nutzfahrzeugs, um für einen Betrieb der Aufbauten erforderliche Leistung von der Brennkraftmaschine des Nutzfahrzeugs anfordern zu können. Jedoch ist es aufwändig und teuer, eine für den Betrieb der Aufbauten erforderliche Steuerung des Antriebsstrangs zu implementieren.

Die DE 103 34 536 A1 beschreibt, dass es bei Kraftfahrzeugen bekannt ist, zusätzlich zu einem herstellereigenen Betriebsprogramm Programme von Dritten zu installieren, die dort als Plug-In bezeichnet werden. Diese Plug-Ins werden über eine offene Schnittstelle angeschlossen und sind beliebig austauschbar. Die Plug-Ins werden unabhängig von der Auswahl der Signale erzeugt.

Die US-A 6,076,622 beschreibt ein Zusammenwirken unterschiedlicher Komponenten, die von unterschiedlichen Herstellern stammen können. In einem Ausführungsbeispiel wird ein Abstand von einem Sensor erfasst und verarbeitet. Einzelheiten der Ansteuerung von Motor und Getriebe werden in jeweiligen Modulen festgelegt.

Einen ähnlichen Aufbau beschreibt auch die DE 101 29 921 A1.

Die DE 100 44 319 A1 beschreibt schließlich modular austauschbare Betriebsfunktionen, die an eine Schnittstelle angeschlossen werden. Hierbei wird bei Fahrfunktionen wie beispielsweise der adaptive cruise control keine Rücksicht auf eine motorspezifische Auswahl genommen.

Die Aufgabe der Erfindung ist, ein Verfahren und ein Computerprogramm zu schaffen, das ein einfaches Konfigurieren einer Steuervorrichtung ermöglicht. Die Aufgabe der Erfindung ist ferner, eine Steuervorrichtung zu schaffen, die einfach erweiterbar ist und die zuverlässig ist.

Gemäß einem ersten Aspekt zeichnet sich die Erfindung aus durch ein Verfahren zum Konfigurieren einer Steuervorrichtung für ein Kraftfahrzeug und durch ein entsprechendes Computerprogramm. Eine jeweilige Repräsentation von Signalen der Steuervorrichtung wird zur Auswahl bereitgestellt und eine erfolgte Auswahl wird als eine vorgegebene erste Auswahl von Signalen der Steuervorrichtung vorgegeben. Mindestens zwei Repräsentationen von nebenläufig ausführbaren Programmprozessen sind erzeugbar. Mindestens eine dieser Repräsentationen wird als eine jeweilige Repräsentation eines Betriebsprogrammprozesses erzeugt und mindestens eine dieser Repräsentationen wird als eine jeweilige Repräsentation eines Zusatzprogrammprozesses erzeugt. Ein Zugriff des mindestens einen Zusatzprogrammprozesses ist auf die vorgegebene erste Auswahl von Signalen der Steuervorrichtung beschränkt. Ferner wird auf der Steuervorrichtung ausführbarer Programmkode erzeugt abhängig von der vorgegebenen ersten Auswahl von Signalen der Steuervorrichtung und abhängig von den erzeugten mindestens zwei Repräsentationen von nebenläufig ausführbaren Programmprozessen. Das Computerprogramm umfasst Programmanweisungen, die bei ihrer Ausführung auf einem Computer die vorstehenden Schritte durchführen. Ferner ist das Computerprogramm vorzugsweise auf einem computerlesbaren Medium ausgebildet.
Der auf der Steuervorrichtung ausführbare Programmkode wird derart erzeugt, dass die Programmprozesse in der Steuervorrichtung nebenläufig ausführbar sind und dass der Zugriff auf die Signale der Steuervorrichtung gemäß der vorgegebenen ersten Auswahl von Signalen der Steuervorrichtung für den mindestens einen Zusatzrogrammprozess beschränkt ist. Vorzugsweise wird ferner die jeweilige Repräsentation von Signalen der Steuervorrichtung zur Auswahl bereitgestellt und wird eine jeweilige weitere erfolgte Auswahl als eine vorgegebene zweite Auswahl von Signalen der Steuervorrichtung vorgegeben, auf die ein Zugriff des mindestens einen Betriebsprogrammprozesses jeweils beschränkt ist.
Der Vorteil ist, dass ein jeweiliges Betriebsprogramm, das im Rahmen des mindestens einen Betriebsprogrammprozesses ausführbar ist, und ein jeweiliges Zusatzprogramm, das im Rahmen des mindestens einen Zusatzprogrammprozesses ausführbar ist, in ihrem jeweiligen Programmprozess gekapselt sind. Dadurch ist eine hohe Sicherheit und Zuverlässigkeit möglich. Die Programme können sich dadurch bei Fehlern nicht gegenseitig beeinträchtigen. Das jeweilige Betriebsprogramm und das jeweilige Zusatzprogramm sind so weitgehend unabhängig voneinander betreibbar. Ferner ist durch die Beschränkung des Zugriffs auf die erste Auswahl von Signalen der Steuervorrichtung für den mindestens einen Zusatzprogrammprozess eine hohe Sicherheit und Zuverlässigkeit möglich. Das jeweilige Zusatzprogramm kann dadurch insbesondere nicht Signale des Betriebsprogramms beeinflussen oder beeinträchtigen, die nicht durch die vorgegebene erste Auswahl von Signalen der Steuervorrichtung umfasst sind. Dadurch werden unbefugte Manipulation und Fehlfunktion der Steuervorrichtung durch das jeweilige Zusatzprogramm vermieden, das im Rahmen des mindestens einen Zusatzprogrammprozesses läuft.

In einer vorteilhaften Ausgestaltung umfasst das Erzeugen des auf der Steuervorrichtung ausführbaren Programmkodes ein Erzeugen einer Installationsfunktion für mindestens ein Zusatzprogramm eines Drittherstellers, das im Rahmen des mindestens einen Zusatzprogrammprozesses auf der Steuervorrichtung ausführbar ist, zum Ermöglichen eines nachträglichen Installierens des mindestens einen Zusatzprogramms durch einen Dritten unabhängig von mindestens einem Betriebsprogramm, das im Rahmen des mindestens einen Betriebsprogrammprozesses auf der Steuervorrichtung ausführbar ist. Dadurch kann zum Beispiel der Dritthersteller, der das mindestens eine Zusatzprogramm herstellt, unabhängig von einem Fahrzeughersteller oder einem Hersteller der Steuervorrichtung, der das mindestens eine Betriebsprogramm herstellt und in der Steuervorrichtung implementiert, das mindestens eine Zusatzprogramm in der Steuervorrichtung implementieren und/oder verändern. Eine Verantwortlichkeit für etwaige Fehlfunktionen des mindestens einen Betriebsprogramms oder des mindestens einen Zusatzprogramms kann so leichter zugeordnet werden, zum Beispiel zu dem Fahrzeughersteller oder zu dem Dritthersteller.

In einer weiteren vorteilhaften Ausgestaltung ist eine Zykluszeit und/oder eine Priorität für ein Ausführen des jeweiligen Zusatzprogrammprozesses vorgebbar. Die jeweils vorgegebene Zykluszeit und/oder Priorität wird über die jeweils zugehörige Repräsentation dem jeweiligen Zusatzprogrammprozess zugeordnet. Der Programmkode wird abhängig von der zugeordneten Zykluszeit und/oder Priorität derart erzeugt, dass die jeweiligen Zusatzprogrammprozesse in der Steuervorrichtung mit dieser Zykluszeit beziehungsweise Priorität ausführbar sind. Der Vorteil ist, dass eine maximal durch den jeweiligen, das mindestens eine Zusatzprogramm ausführende Zusatzprogrammprozess in Anspruch genommene Rechenleistung dadurch vorgebbar oder steuerbar ist. Der jeweilige Zusatzprogrammprozess des jeweiligen Zusatzprogramms kann bei geeigneter Vorgabe der Zykluszeit und/oder der Priorität nicht das Ausführen des mindestens einen Betriebsprogrammprozesses des jeweiligen Betriebsprogramms beeinträchtigen. Dadurch ist ein deterministischer und besonders sicherer und zuverlässiger Betrieb der Steuervorrichtung möglich.

In einer weiteren vorteilhaften Ausgestaltung umfasst die Steuervorrichtung in mindestens einem Datenspeicher mindestens einen gemeinsamen Datenspeicherbereich zum Speichern der vorgegebenen ersten Auswahl von Signalen der Steuervorrichtung und der Zugriff des mindestens einen Zusatzprogrammprozesses auf den mindestens einen Datenspeicher wird auf den gemeinsamen Datenspeicherbereich beschränkt. Der Vorteil ist, dass das jeweilige Zusatzprogramm nur beschränkten Zugriff auf die Signale der Steuervorrichtung hat, so dass Kraftfahrzeugfunktionen durch diese Beschränkung geschützt sein können vor dem Zugriff durch das mindestens eine Zusatzprogramm. Dies ermöglicht eine hohe Sicherheit und Zuverlässigkeit der Steuervorrichtung. Kraftfahrzeugfunktionen können so geschützt sein vor unbefugter Benutzung oder Missbrauch durch das mindestens eine Zusatzprogramm oder Fehlfunktion des mindestens einen Zusatzprogramms.

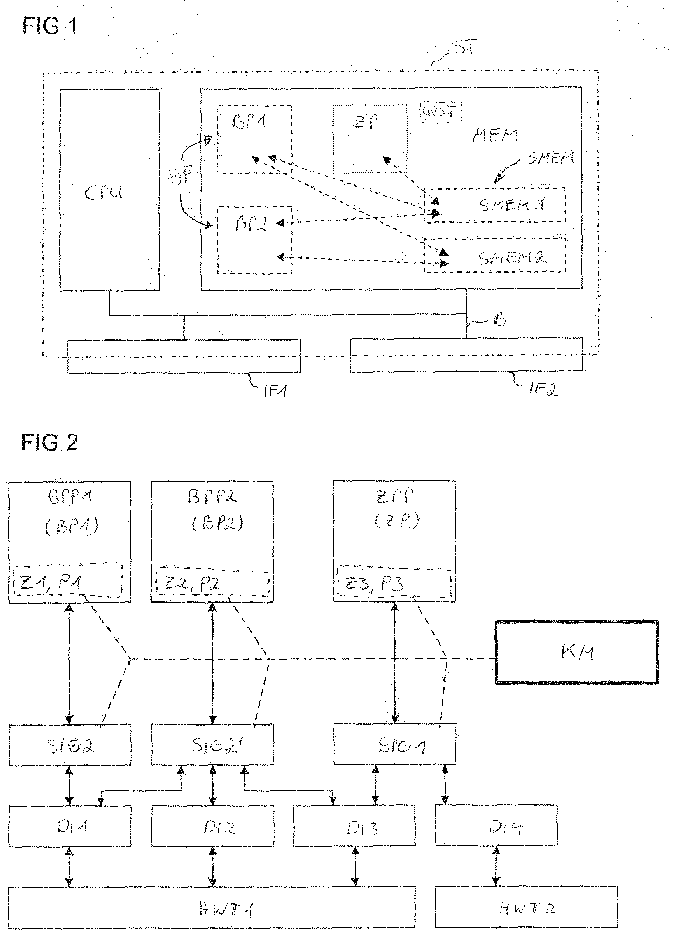

Gemäß einem zweiten Aspekt zeichnet sich die Erfindung aus durch eine Steuervorrichtung zum Steuern mindestens einer Kraftfahrzeugfunktion in einem Kraftfahrzeug. Die Steuervorrichtung umfasst mindestens einen Datenspeicher und mindestens eine Recheneinrichtung. Die Steuervorrichtung ist ausgebildet zum Speichern mindestens eines Zusatzprogramms eines Drittherstellers in dem mindestens einen Datenspeicher unabhängig von mindestens einem Betriebsprogramm, das in dem mindestens einen Datenspeicher gespeichert ist. Ferner ist die Steuervorrichtung ausgebildet zum nebenläufigen Ausführen des mindestens einen Zusatzprogramms durch die mindestens eine Recheneinrichtung im Rahmen eines Zusatzprogrammprozesses neben mindestens einem Betriebsprogrammprozess, in dessen Rahmen das mindestens eine Betriebsprogramm ausführbar ist. Ein Zugriff des mindestens einen Zusatzprogrammprozesses ist auf eine vorgegebene erste Auswahl von Signalen der Steuervorrichtung beschränkt. Der Kommunikationsmanager ist ausgebildet, den mindestens einen Betriebsprogrammprozess und den mindestens einen Zusatzprogrammprozess und die Signale der Steuervorrichtung zu konfigurieren, auf die der Zugriff des mindestens einen Zusatzprogrammprozesses beschränkt sein soll, und auf der Steuervorrichtung ausführbaren Programmcode zu erzeugen, abhängig von der vorgegebenen ersten Auswahl von Signalen (SIG1) und von den erzeugten mindestens zwei Repräsentationen. Vorteile und vorteilhafte Ausgestaltungen sowie deren Vorteile entsprechen im Wesentlichen denen, die in Bezug auf den ersten Aspekt genannt sind.
Ausführungsbeispiele der Erfindung sind im Folgenden anhand der schematischen Zeichnungen erläutert. Es zeigen:
- Figur 1: eine Steuervorrichtung,
- Figur 2: einen Konfigurationsmanager und Repräsentationen von Programmprozessen und Signalen der Steuervorrichtung und
- Figur 3: ein Ablaufdiagramm.
Elemente gleicher Konstruktion oder Funktion sind figurenübergreifend mit den gleichen Bezugszeichen versehen.
Eine Steuereinheit ST umfasst mindestens eine Recheneinrichtung CPU und mindestens einen Datenspeicher MEM (Figur 1). Die mindestens eine Recheneinrichtung CPU ist beispielsweise jeweils als ein Mikroprozessor oder als ein Mikrocontroller ausgebildet. Der mindestens eine Datenspeicher MEM umfasst beispielsweise mindestens einen flüchtigen Speicher und/oder mindestens einen nichtflüchtigen Speicher. Die Steuervorrichtung ST umfasst ferner mindestens eine erste Hardware-Schnittstelle IF1 zum Koppeln mit externen Vorrichtungen, zum Beispiel mindestens einem Sensor und/oder Aktor und/oder mindestens einer weiteren Steuervorrichtung ST. Die Steuervorrichtung ST umfasst vorzugsweise auch mindestens eine zweite Hardware-Schnittstelle IF2 zum Koppeln mit externen Vorrichtungen, zum Beispiel mindestens einem Sensor und/oder Aktor und/oder mindestens einer weiteren Steuervorrichtung ST. Die mindestens eine Recheneinrichtung CPU, der mindestens eine Datenspeicher MEM, die mindestens eine erste Hardware-Schnittstelle IF1 und die mindestens eine zweite Hardware-Schnittstelle IF2 sind vorzugsweise über einen Datenbus B miteinander gekoppelt.

Die mindestens eine erste Hardware-Schnittstelle IF1 ist vorzugsweise als eine Fahrzeugdatenbusschnittstelle ausgebildet, zum Beispiel für ein "Controller Area Network" oder kurz: CAN. Die mindestens eine zweite Hardware-Schnittstelle IF2 ist vorzugsweise ausgebildet zum Koppeln mit externen Sensoren und/oder Aktoren. Die Steuervorrichtung ST ist insbesondere ausgebildet und vorgesehen für einen Einbau in ein Kraftfahrzeug und insbesondere für einen Einbau in ein Nutzfahrzeug. Die Steuervorrichtung ST kann auch als Steuergerät bezeichnet werden. Die Steuervorrichtung ST ist insbesondere ausgebildet zum Steuern mindestens einer Kraftfahrzeugfunktion in dem Kraftfahrzeug oder Nutzfahrzeug, beispielsweise zum Steuern einer Brennkraftmaschine des Kraftfahrzeugs oder Nutzfahrzeugs oder zum Steuern einer anderen Komponente eines Antriebsstrangs des Kraftfahrzeugs oder Nutzfahrzeugs.

Beispielsweise ist die Steuervorrichtung ST vorgesehen für ein Nutzfahrzeug mit einem Aufbau eines Drittherstellers. Ein Fahrzeughersteller stellt beispielsweise ein Fahrgestell her und liefert dieses an den Dritthersteller, der auf das Fahrgestell den Aufbau montiert. Der Aufbau kann beispielsweise einen Betonmischer oder eine Feuerwehrleiter umfassen. Das Fahrgestell umfasst insbesondere die durch den Fahrzeughersteller konfigurierte Steuervorrichtung ST. Für einen Betrieb des jeweiligen Aufbaus ist beispielsweise ein Zugriff auf den Antriebsstrang erforderlich, um zum Beispiel Leistung für einen Betrieb des Betonmischers oder für ein Ausfahren oder Einfahren der Feuerwehrleiter anfordern und von dem Antriebsstrang abgreifen zu können. Dies wird auch als "power take-off control" bezeichnet.

Dieser Zugriff auf den Antriebsstrang erfolgt insbesondere über die Steuervorrichtung ST.

In dem mindestens einen Datenspeicher MEM ist mindestens ein Betriebsprogramm BP gespeichert, zum Beispiel ein erstes Betriebsprogramm BP1 und ein zweites Betriebsprogramm BP2. Das mindestens eine Betriebsprogramm BP wird vorzugsweise durch den Fahrzeughersteller konfiguriert und implementiert und in dem mindestens einen Datenspeicher MEM gespeichert. Alternativ kann das mindestens eine Betriebsprogramm BP auch durch einen Hersteller der Steuervorrichtung ST konfiguriert, implementiert und in dem mindestens einen Datenspeicher MEM gespeichert werden. Das mindestens eine Betriebsprogramm BP ist insbesondere vorgesehen zum Steuern der mindestens einen Kraftfahrzeugfunktion und insbesondere zum Steuern der mindestens einen Kraftfahrzeugfunktion des Fahrwerks und/oder der Brennkraftmaschine und/oder des Antriebsstrangs. Das mindestens eine Betriebsprogramm BP ist daher im Allgemeinen nicht an einen bestimmten Aufbau auf dem Fahrwerk angepasst, sondern kann mit verschiedenen Aufbauten unverändert genutzt werden.

Für ein Steuern von Funktionen des jeweiligen Aufbaus ist in dem mindestens einen Datenspeicher MEM mindestens ein Zusatzprogramm ZP speicherbar, das im Allgemeinen von dem Dritthersteller oder von einem im Auftrag oder auf Weisung des Drittherstellers handelnden weiteren Dritthersteller entwickelt und implementiert wird und das vorzugsweise speziell an den jeweiligen Aufbau oder dessen Typ angepasst ist. Im Allgemeinen sind der Fahrzeughersteller und der Hersteller der Steuervorrichtung ST nicht maßgeblich an der Entwicklung oder Implementation des mindestens einen Zusatzprogramms ZP beteiligt.

Um die Sicherheit und Zuverlässigkeit der Steuervorrichtung ST und des Kraftfahrzeugs gewährleisten zu können, müssen Maßnahmen ergriffen werden, um zu verhindern, dass insbesondere Fehler des Zusatzprogramms ZP sich diesbezüglich negativ auswirken. Dem mindestens einen Zusatzprogramm ZP sollen daher insbesondere nur bestimmte Signale SIG der Steuervorrichtung ST zur Verfügung stehen. Ferner soll das mindestens eine Zusatzprogramm ZP weitgehend unabhängig von dem mindestens einen Betriebsprogramm BP ausführbar sowie installierbar sein, so dass der Dritthersteller sein jeweiliges Zusatzprogramm ZP unabhängig von dem Fahrzeughersteller oder dem Hersteller der Steuervorrichtung ST in dem mindestens einen Datenspeicher MEM installieren oder speichern oder verändern kann. Der Betrieb des mindestens einen Betriebsprogramms BP soll dadurch möglichst nicht beeinträcht werden können.

Dazu ist vorgesehen, dass die Steuervorrichtung ST ausgebildet ist, das mindestens eine Betriebsprogramm BP und das mindestens eine Zusatzprogramm ZP nebenläufig oder parallel in separaten Programmprozessen auszuführen. Dies wird auch als "multitasking" bezeichnet, die Programmprozesse werden auch als "task" bezeichnet. Insbesondere ist mindestens ein Betriebsprogrammprozess BPP vorgesehen und ist mindestens ein Zusatzprogrammprozess ZPP vorgesehen. Das mindestens eine Zusatzprogramm ZP ist im Rahmen des mindestens einen Zusatzprogrammprozesses ZPP ausführbar und das mindestens eine Betriebsprogramm BP ist im Rahmen des mindestens einen Betriebsprogrammprozesses BPP ausführbar. Zum Beispiel ist das erste Betriebsprogramm BP1 in einem ersten Betriebsprogrammprozess BPP1 ausführbar und ist das zweite Betriebsprogramm BP2 in einem zweiten Betriebsprogrammprozess BPP2 ausführbar.

Um dem Dritthersteller die Möglichkeit zu geben, sein jeweiliges Zusatzprogramm ZP unabhängig von dem Fahrzeughersteller oder dem Hersteller der Steuervorrichtung ST in dem mindestens einen Datenspeicher MEM installieren oder speichern oder verändern zu können und um sicherstellen zu können, dass die Sicherheit und Zuverlässigkeit der Steuervorrichtung ST durch das mindestens eine Zusatzprogramm ZP nicht gefährdet werden kann, muss die Steuervorrichtung ST geeignet konfiguriert werden. Dazu ist ein Konfigurationsmanager KM vorgesehen, der vorzugsweise als ein Computerprogramm zum Konfigurieren der Steuervorrichtung ST ausgebildet ist, der jedoch ebenso als eine entsprechende Vorrichtung ausgebildet sein kann (Figur 2). Ferner kann eine solche Vorrichtung das Computerprogramm auch umfassen. Der Konfigurationsmanager KM ist ausgebildet, die Programmprozesse zu konfigurieren, das heißt den mindestens einen Betriebsprogrammprozess BPP und den mindestens einen Zusatzprogrammprozess ZPP, und die Signale SIG der Steuervorrichtung ST zu konfigurieren, auf die der Zugriff des mindestens einen Zusatzprogrammprozesses ZPP beschränkt sein soll, und auf der Steuervorrichtung ST ausführbaren Programmkode PROG zu erzeugen, der in dem mindestens einen Datenspeicher MEM speicherbar ist. Bevorzugt ist der Konfigurationsmanager KM ferner ausgebildet zum Zuweisen des mindestens einen Betriebsprogramms BP zu seinem jeweiligen Betriebsprogrammprozess BPP und zum Erzeugen des Programmkodes PROG einschließlich des mindestens einen Betriebsprogramms BP und gegebenenfalls auch zum Zuweisen des mindestens einen Zusatzprogramms ZP zu seinem jeweiligen Zusatzprogrammprozess ZPP und zum Erzeugen von Programmkode PROG des mindestens einen Zusatzprogramms ZP. Vorzugsweise ist der Konfigurationsmanager KM Teil einer modellbasierten Entwicklungsumgebung oder umfasst der Konfigurationsmanager KM die modellbasierte Entwicklungsumgebung. Figur 2 zeigt den Konfigurationsmanager KM und Repräsentationen von Software-Komponenten der Steuervorrichtung ST. Die Software-Komponenten sind als Teil des Programmkodes PROG auf der Steuervorrichtung ST ausführbar. Figur 2 zeigt beispielhaft eine Repräsentation des ersten Betriebsprogrammprozesses BPP1, eine Repräsentation des zweiten Betriebsprogrammprozesses BPP2 und eine Repräsentation des mindestens einen Zusatzprozesses ZPP. Ferner ist jedem dieser Programmprozesse jeweils eine Auswahl von Signalen SIG der Steuervorrichtung ST zugeordnet.
Der Konfigurationsmanager KM bietet vorzugsweise alle verfügbaren Signale SIG der Steuervorrichtung ST in Form von Repräsentationen der jeweiligen Signale SIG der Steuervorrichtung ST zur Auswahl an, zum Beispiel in Form einer Auswahlliste. Abhängig von einer erfolgten Auswahl aus allen verfügbaren Signalen SIG der Steuervorrichtung ST wird durch den Konfigurationsmanager KM eine vorgegebene erste Auswahl SIG1 von Signalen SIG der Steuervorrichtung ST vorgegeben für den mindestens einen Zusatzprogrammprozess ZPP. Die vorgegebene erste Auswahl SIG1 von Signalen SIG der Steuervorrichtung ST umfasst beispielsweise ein Signal betreffend ein Erhöhen einer Motordrehzahl und/oder Rückmeldungen von Fahrzeugfunktionen, zum Beispiel betreffend einem Getriebe im Leerlauf. Vorzugsweise wird ferner abhängig von einer weiteren erfolgten Auswahl aus allen verfügbaren Signalen SIG der Steuervorrichtung ST durch den Konfigurationsmanager KM eine vorgegebene zweite Auswahl SIG2 und gegebenenfalls auch eine weitere vorgegebene zweite Auswahl SIG2' von Signalen SIG der Steuervorrichtung ST für den jeweiligen Betriebsprogrammprozess BPP vorgegeben.

Die vorgegebene erste Auswahl SIG1 und die vorgegebene zweite Auswahl SIG2 und gegebenenfalls die weitere vorgegebene zweite Auswahl SIG2' von Signalen SIG der Steuervorrichtung ST können übereinstimmende Signale SIG der Steuervorrichtung ST umfassen. Vorzugsweise umfassen die vorgegebene erste Auswahl SIG1 und die vorgegebene zweite Auswahl SIG2 und gegebenenfalls die weitere vorgegebene zweite Auswahl SIG2' von Signalen SIG der Steuervorrichtung ST unterschiedliche Kombinationen von Signalen SIG der Steuervorrichtung ST.

Vorzugsweise ist die vorgegebene erste Auswahl SIG1 gegenüber der vorgegebenen zweiten Auswahl SIG2 und der weiteren vorgegebenen zweiten Auswahl SIG2' von Signalen SIG der Steuervorrichtung ST eingeschränkt, das heißt, die vorgegebene erste Auswahl SIG1 umfasst vorzugsweise weniger Signale SIG der Steuervorrichtung ST als die vorgegebene zweite Auswahl SIG2 und die weitere vorgegebene zweite Auswahl SIG2' von Signalen SIG der Steuervorrichtung ST und umfasst insbesondere bevorzugt solche Signale SIG nicht, die sicherheitskritisch oder für die Zuverlässigkeit der Steuervorrichtung ST wesentlich sind. Die vorgegebene erste Auswahl SIG1 von Signalen SIG der Steuervorrichtung ST umfasst insbesondere im Wesentlichen nur diejenigen Signale SIG der Steuervorrichtung ST, die für den Betrieb von Aufbauten zwingend erforderlich sind. Die vorgegebene erste Auswahl SIG1 von Signalen SIG der Steuervorrichtung ST wird vorzugsweise von dem Fahrzeughersteller oder dem Hersteller der Steuervorrichtung ST vorgegeben, so dass der Dritthersteller für sein jeweiliges Zusatzprogramm ZP nur diese vorgegebene erste Auswahl SIG1 von Signalen SIG der Steuervorrichtung ST nutzen kann. Der Zugriff auf Signale SIG der Steuervorrichtung ST ist für den mindestens einen Zusatzprogrammprozess ZPP und für das jeweilige Zusatzprogramm ZP somit auf die vorgegebene erste Auswahl SIG1 von Signalen SIG der Steuervorrichtung ST beschränkt. Der Zugriff auf Signale SIG der Steuervorrichtung ST, die nicht durch die vorgegebene erste Auswahl SIG1 umfasst sind, ist für den mindestens einen Zusatzprogrammprozess ZPP und das jeweilige Zusatzprogramm ZP nicht möglich. Entsprechend sind solche Signale SIG der Steuervorrichtung ST vor dem Zugriff des mindestens einen Zusatzprogrammprozesses ZPP und des jeweiligen Zusatzprogramms ZP geschützt.

Ein derartiges Beschränken des Zugriffs ist beispielsweise durch Vorsehen mindestens eines gemeinsamen Datenspeicherbereichs SMEM implementierbar. Ein solcher gemeinsamer Datenspeicherbereich SMEM kann auch als "shared memory" bezeichnet werden. Beispielsweise ist für ein Speichern der Signale SIG der Steuervorrichtung ST gemäß der vorgegebenen ersten Auswahl SIG1 von Signalen SIG der Steuervorrichtung ST ein erster gemeinsamer Datenspeicherbereich SMEM1 vorgesehen. Der Zugriff des mindestens einen Zusatzprogrammprozesses ZPP und des jeweiligen Zusatzprogramms ZP ist auf diesen ersten gemeinsamen Datenspeicherbereich SMEM1 beschränkt. Dadurch ist eine Art "firewall" gebildet. Für andere Signale SIG der Steuervorrichtung ST, die nicht durch die vorgegebene erste Auswahl SIG1 von Signalen SIG der Steuervorrichtung ST umfasst sind, kann mindestens ein weiterer gemeinsamer Datenspeicherbereich vorgesehen sein, zum Beispiel ein zweiter gemeinsamer Datenspeicherbereich SMEM2. Es kann auch vorgesehen sein, dass jedem Programmprozess ein jeweiliger gemeinsamer Datenspeicherbereich SMEM zugeordnet ist, in dem die Signale SIG der Steuervorrichtung ST gemäß der jeweiligen vorgegebenen Auswahl der Signale SIG der Steuervorrichtung ST speicherbar sind. Der Zugriff des mindestens einen Betriebsprogrammprozesses BPP und des jeweiligen Betriebsprogramms BP muss jedoch im Allgemeinen nicht auf einen der gemeinsamen Datenspeicherbereiche SMEM beschränkt sein, so dass diese beispielsweise auch auf den ersten gemeinsamen Datenspeicherbereich SMEM1 zugreifen können.

Zur Sicherstellung der Betriebssicherheit der Steuervorrichtung ST ist es ferner vorteilhaft, dem jeweiligen Programmprozess und insbesondere dem mindestens einen Zusatzprogrammprozess ZPP eine Zykluszeit Z und/oder eine Priorität P zuzuweisen, mit der der jeweilige Zusatzprogrammprozess ZPP und somit das jeweilige Zusatzprogramm ZP ausführbar ist. Durch Vorgabe der Zykluszeit Z und/oder der Priorität P kann zuverlässig verhindert werden, dass der mindestens eine Zusatzprogrammprozess ZPP und das jeweilige Zusatzprogramm ZP das Ausführen des mindestens einen Betriebsprogrammprozesses BPP und des jeweiligen Betriebsprogramms BP verhindert oder beeinträchtigt, indem der mindestens eine Zusatzprogrammprozess ZPP und das jeweilige Zusatzprogramm ZP einen zu großen Anteil der insgesamt in der Steuervorrichtung ST zur Verfügung stehenden Rechenleistung für sich beansprucht. Durch Vorgabe der Zykluszeit Z und/oder der Priorität P ist somit im Wesentlichen ein Anteil an der zur Verfügung stehenden Rechenleistung für den mindestens einen Zusatzprogrammprozess ZPP und das jeweilige Zusatzprogramm ZP vorgebbar. Bevorzugt ist auch für den mindestens einen Betriebsprogrammprozess BPP und das jeweilige Betriebsprogramm BP eine jeweilige Zykluszeit Z und/oder Priorität P vorgebbar. Die jeweilige Zykluszeit Z und/oder Priorität P ist mittels des Konfigurationsmanagers KM vorgebbar und wird durch diesen der Repräsentation des jeweiligen Programmprozesses zugeordnet. Beispielsweise wird durch den Konfigurationsmanager KM dem ersten Betriebsprogrammprozess BPP1 eine erste Zykluszeit Z1 und/oder eine erste Priorität P1 zugeordnet. Beispielsweise beträgt die erste Zykluszeit Z1 20 Millisekunden. Beispielsweise wird durch den Konfigurationsmanager KM dem zweiten Betriebsprogrammprozess BPP2 eine zweite Zykluszeit Z2 und/oder eine zweite Priorität P2 zugeordnet. Beispielsweise beträgt die zweite Zykluszeit Z2 40 Millisekunden. Ferner wird beispielsweise durch den Konfigurationsmanager KM dem mindestens einen Zusatzprogrammprozess ZPP eine dritte Zykluszeit Z3 und/oder eine dritte Priorität P3 zugeordnet. Beispielsweise beträgt die dritte Zykluszeit Z3 100 Millisekunden. Die Zykluszeiten Z und/oder Prioritäten P können jedoch auch anders vorgegeben werden.

Um das mindestens eine Zusatzprogramm ZP unabhängig von dem mindestens einen Betriebsprogramm BP und insbesondere auch nachträglich von einem Dritten, also unabhängig von dem Fahrzeughersteller und dem Hersteller der Steuervorrichtung ST, installieren und in dem mindestens einen Datenspeicher MEM speichern oder verändern zu können, also insbesondere auch Aktualisierungen des mindestens einen Zusatzprogramms ZP durchführen zu können, ist bevorzugt vorgesehen, dass bei dem Erzeugen des Programmkodes PROG eine Installationsfunktion INST erzeugt wird. Die Installationsfunktion INST wird vorzugsweise in dem mindestens einen Datenspeicher MEM gespeichert und ist durch die mindestens eine Recheneinrichtung CPU ausführbar. Die Installationsfunktion INST ist durch den Dritten nutzbar, zum Beispiel durch den Dritthersteller oder durch eine Werkstatt.

Die Signale SIG der Steuervorrichtung ST werden beispielsweise durch mindestens eine Software-Schnittstelle zu der mindestens einen Hardware-Schnittstelle, insbesondere zu der ersten und der zweiten Hardware-Schnittstelle IF1, IF2, bereitgestellt. Die Signale SIG der Steuervorrichtung ST können jedoch auch interne Vorgänge der Steuervorrichtung ST betreffen und können beispielsweise auch einer Signalisierung zwischen verschiedenen Programmprozessen dienen. Beispielsweise ist eine erste Software-Schnittstelle DI1, eine zweite Software-Schnittstelle DI2, eine dritte Software-Schnittstelle DI3 und eine vierte Software-Schittstelle DI4 vorgesehen. Es können jedoch mehr oder weniger als die genannten Software-Schnittstellen vorgesehen sein. Die jeweilige Software-Schnittstelle ist insbesondere vorgesehen zur Signalaufbereitung und Signalverarbeitung. Beispielsweise ist mindestens eine der Software-Schnittstellen vorgesehen zum Auswerten von Nachrichten, die über den Fahrzeugdatenbus empfangen werden. Beispielsweise werden diese Nachrichten zerlegt und wird eine in diesen transportierte Nutzinformation den betreffenden Signalen SIG der Steuervorrichtung ST zugeordnet. Entsprechend kann gegebenenfalls umgekehrt abhängig von Signalen SIG der Steuervorrichtung ST eine jeweilige Nachricht erzeugt und über den Fahrzeugdatenbus versandt werden. Die jeweilige Software-Schnittstelle kommuniziert dazu mit mindestens einem Hardware-Treiber, zum Beispiel einem ersten Hardware-Treiber HWT1 und einem zweiten Hardware-Treiber HWT2. Der erste Hardware-Treiber HWT1 ist beispielsweise der ersten Hardware-Schnittstelle IF1 zugeordnet und ermöglicht deren Betrieb. Entsprechend ist beispielsweise der zweite Hardware-Treiber HWT2 der zweiten Hardware-Schittstelle IF2 zugeordnet und ermöglicht deren Betrieb.

Die mindestens eine Software-Schnittstelle und der mindestens eine Hardware-Treiber sind beispielsweise durch den Hersteller der Steuervorrichtung ST vorgegeben und entsprechend geeignet für die Steuervorrichtung ST ausgebildet. Die zugehörigen Software-Komponenten werden bei dem Erzeugen des Programmkodes PROG berücksichtigt und integriert. Durch die mindestens eine Software-Schnittstelle sind insbesondere die insgesamt in der Steuervorrichtung ST zur Verfügung stehenden Signale SIG der Steuervorrichtung ST vorgegeben, die von dem Konfigurationsmanager KM zur Auswahl bereitgestellt werden. Das Erzeugen des Programmkodes PROG umfasst vorzugsweise auch ein Erzeugen eines Speicherbildes, das insbesondere den mindestens einen gemeinsamen Datenspeicherbereich SMEM und insbesondere den ersten gemeinsamen Datenspeicherbereich SMEM1 umfasst und das gegebenenfalls auch den dem mindestens einen Betriebsprogramm BP und/oder der Installationsfunktion INST zugehörigen Programmkode sowie den zugehörigen Programmkode der mindestens einen Software-Schnittstelle und des mindestens einen Hardware-Treibers umfasst. Das Speicherbild wird vorzugsweise in dem mindestens einen Datenspeicher MEM der Steuervorrichtung ST gespeichert.

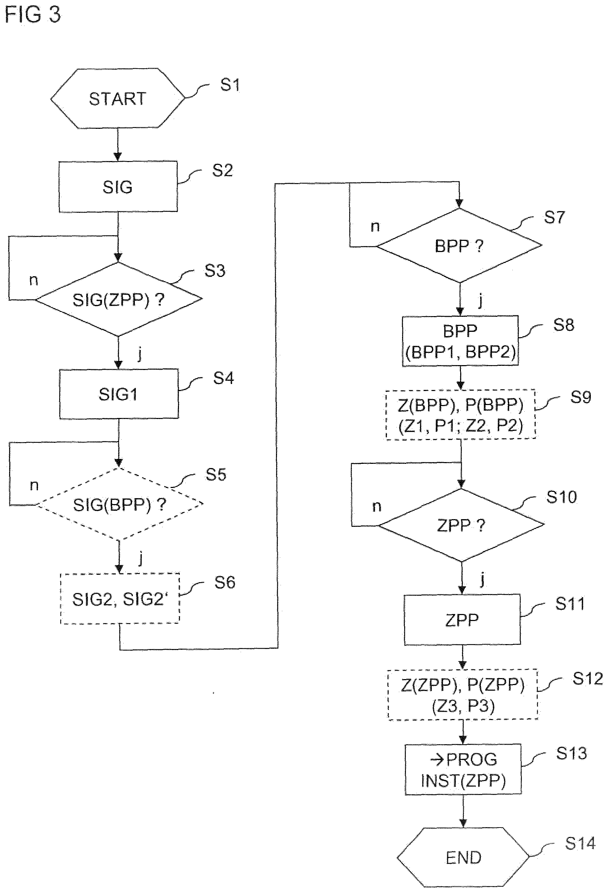

Figur 3 zeigt ein Ablaufdiagramm des Computerprogramms zum Konfigurieren der Steuervorrichtung ST. Das Programm startet in dem Schritt S1, in dem beispielsweise Variablen initialisiert werden. In einem Schritt S2 werden die in der Steuervorrichtung ST zur Verfügung stehenden Signale SIG der Steuervorrichtung ST als ihre jeweilige Repräsentation zur Auswahl bereitgestellt, zum Beispiel in Form der Auswahlliste. In einem Schritt S3 wird überprüft, ob die Auswahl erfolgt ist. Die erfolgte Auswahl wird in einem Schritt S4 als die vorgegebene erste Auswahl SIG1 von Signalen SIG der Steuervorrichtung ST vorgegeben. Es kann in einem Schritt S5 und einem Schritt S6 entsprechend vorgesehen sein, abhängig von einer jeweiligen weiteren erfolgten Auswahl aus den in der Steuervorrichtung ST zur Verfügung stehenden Signalen SIG der Steuervorrichtung ST die vorgegebene zweite Auswahl SIG2 und gegebenenfalls die mindestens eine weitere vorgegebene zweite Auswahl SIG2' von Signalen SIG der Steuervorrichtung ST vorzugeben.

In einem Schritt S7 wird überprüft, ob das Erzeugen der Repräsentation des mindestens einen Betriebsprogrammprozesses BPP gewählt wurde. Wurde dies gewählt, dann wird in einem Schritt S8 die Repräsentation des mindestens einen Betriebsprogrammprozesses BPP erzeugt, zum Beispiel des ersten Betriebsprogrammprozesses BPP1 oder des zweiten Betriebsprogrammprozesses BPP2. Gegebenenfalls wird dem jeweiligen Betriebsprogrammprozess BPP auch die Repräsentation des jeweiligen Betriebsprogramms BP zugeordnet, zum Beispiel in Form des jeweiligen Quelltextes oder des bereits vorkompilierten zugehörigen Programmkodes. In einem Schritt S9 kann ferner vorgesehen sein, der Repräsentation des jeweiligen Betriebsprogrammprozesses BPP die Zykluszeit Z und/oder die Priorität P zuzuordnen.

In Schritten S10 bis S12 wird entsprechend den Schritten S7 bis S9 die Repräsentation des mindestens einen Zusatzprogrammprozesses ZPP erstellt. In dem Schritt S10 wird dazu überprüft, ob das Erzeugen der Repräsentation des mindestens einen Zusatzprogrammprozesses ZPP gewählt wurde. Wurde dies gewählt, dann wird in dem Schritt S11 die Repräsentation des mindestens einen Zusatzprogrammprozesses ZPP erzeugt. Der Zugriff des mindestens einen Zusatzprogrammprozesses ZPP und des in dessen Rahmen ausführbaren Zusatzprogramms ZP auf Signale SIG der Steuervorrichtung ST wird dabei auf die vorgegebene erste Auswahl SIG1 von Signalen SIG der Steuervorrichtung ST beschränkt. In dem Schritt S12 kann ferner vorgesehen sein, der Repräsentation des mindestens einen Zusatzprogrammprozesses ZPP die Zykluszeit Z und/oder die Priorität P zuzuordnen, insbesondere die dritte Zykluszeit Z3 und/oder die dritte Priorität P3.

In einem Schritt S13 wird der Programmkode PROG abhängig von der vorgegebenen ersten Auswahl SIG1 und gegebenenfalls von der vorgegebenen zweiten Auswahl SIG2 und weiteren vorgegebenen zweiten Auswahl SIG2' von Signalen SIG der Steuervorrichtung ST und abhängig von dem mindestens einen konfigurierten Betriebsprogrammprozess BPP und dem mindestens einen konfigurierten Zusatzprogrammprozess ZPP erzeugt. Bevorzugt umfasst der Programmkode PROG die Installationsfunktion INST für das Installieren des mindestens einen Zusatzprogramms und/oder das Speicherbild. Das Programm endet in einem Schritt S14. Eine Reihenfolge der Programmabarbeitung kann auch anders sein. Beispielsweise können die Schritte S7 bis S9 mit den Schritten S10 bis S12 vertauscht werden oder können die Schritte S3 und S4 mit den Schritten S5 und S6 vertauscht werden. Ebenso können beispielsweise die Schritte S2 bis S6 mit den Schritten S7 bis S12 vertauscht werden.

## Patentansprüche

1. Verfahren zum Konfigurieren einer Steuervorrichtung (ST) für ein Kraftfahrzeug, bei dem
- eine jeweilige Repräsentation von Signalen (SIG) der Steuervorrichtung (ST) zur Auswahl bereitgestellt wird und eine erfolgte Auswahl als eine vorgegebene erste Auswahl (SIG1) von Signalen (SIG) der Steuervorrichtung (ST) vorgegeben wird,
- mindestens zwei Repräsentationen von nebenläufig ausführbaren Programmprozessen erzeugbar sind, wobei mindestens eine dieser Repräsentationen als eine jeweilige Repräsentation eines Betriebsprogrammprozesses (BPP) erzeugt wird und mindestens eine dieser Repräsentationen als eine jeweilige Repräsentation eines Zusatzprogrammprozesses (ZPP) erzeugt wird und ein Zugriff des mindestens einen Zusatzprogrammprozesses (ZPP) auf die vorgegebene erste Auswahl (SIG1) von Signalen (SIG) der Steuervorrichtung (ST) beschränkt ist und
- auf der Steuervorrichtung (ST) ausführbarer Programmkode (PROG) erzeugt wird abhängig von der vorgegebenen ersten Auswahl (SIG1) von Signalen (SIG) der Steuervorrichtung (ST) und abhängig von den erzeugten mindestens zwei Repräsentationen von nebenläufig ausführbaren Programmprozessen.

2. Verfahren nach Anspruch 1, bei dem das Erzeugen des auf der Steuervorrichtung (ST) ausführbaren Programmkodes (PROG) ein Erzeugen einer Installationsfunktion (INST) für mindestens ein Zusatzprogramm (ZP) eines Drittherstellers umfasst, das im Rahmen des mindestens einen Zusatzprogrammprozesses (ZPP) auf der Steuervorrichtung (ST) ausführbar ist, zum Ermöglichen eines nachträglichen Installierens des mindestens einen Zusatzprogramms (ZP) durch einen Dritten unabhängig von mindestens einem Betriebsprogramm (BP), das im Rahmen des mindestens einen Betriebsprogrammprozesses (BPP) auf der Steuervorrichtung (ST) ausführbar ist.

3. Verfahren nach einem der vorstehenden Ansprüche, bei dem eine Zykluszeit (Z) und/oder eine Priorität (P) für ein Ausführen des jeweiligen Zusatzprogrammprozesses (ZPP) vorgebbar ist und die jeweils vorgegebene Zykluszeit (Z) und/oder Priorität (P) über die jeweils zugehörige Repräsentation dem jeweiligen Zusatzprogrammprozess (ZPP) zugeordnet wird.

4. Verfahren nach einem der vorstehenden Ansprüche, bei dem die Steuervorrichtung (ST) in mindestens einem Datenspeicher (MEM) mindestens einen gemeinsamen Datenspeicherbereich (SMEM) umfasst zum Speichern der vorgegebenen ersten Auswahl (SIG1) von Signalen (SIG) der Steuervorrichtung (ST) und der Zugriff des mindestens einen Zusatzprogrammprozesses (ZPP) auf den mindestens einen Datenspeicher (MEM) wird beschränkt auf den mindestens einen gemeinsamen Datenspeicherbereich (SMEM).

5. Computerprogramm umfassend Programmanweisungen, die bei ihrer Ausführung auf einem Computer die Schritte gemäß einem der vorstehenden Ansprüche durchführen.

6. Computerprogramm gemäß Anspruch 5, das auf einem computerlesbaren Medium ausgebildet ist.

7. Steuervorrichtung zum Steuern mindestens einer Kraftfahrzeugfunktion in einem Kraftfahrzeug, die mindestens einen Datenspeicher (MEM), einen Kommunikationsmanager (KM) und mindestens eine Recheneinrichtung (CPU) umfasst und die ausgebildet ist
- zum Speichern mindestens eines Zusatzprogramms (ZP) eines Drittherstellers in dem mindestens einen Datenspeicher (MEM) unabhängig von mindestens einem Betriebsprogramm (BP), das in dem mindestens einen Datenspeicher (MEM) gespeichert ist und
- zum nebenläufigen Ausführen des mindestens einen Zusatzprogramms (ZP) durch die mindestens eine Recheneinrichtung (CPU) im Rahmen eines Zusatzprogrammprozesse. (ZPP) neben mindestens einem Betriebsprogrammprozess (BPP), in dessen Rahmen das mindestens eine Betriebsprogramm (BP) ausführbar ist, wobei ein Zugriff des mindestens einen Zusatzprogrammprozesses (ZPP) auf eine vorgegebene erste Auswahl (SIG1) von Signalen (SIG) der Steuervorrichtung (ST) beschränkt ist,
wobei der Kommunikationsmanager (KM) ausgebildet ist, den mindestens einen Betriebsprogrammprozess (BPP) und den mindestens einen Zusatzprogrammprozess (ZPP) und die Signale (SIG) der Steuervorrichtung zu konfigurieren, auf die der Zugriff des mindestens einen Zusatzprogrammprozesses (ZPP) beschränkt sein soll und ausgebildet ist, auf der Steuervorrichtung (ST) ausführbaren Programmcode (PROG) zu erzeugen, abhängig von der vorgegebenen ersten Auswahl von Signalen (SIG1) und von den erzeugten mindestens zwei Repräsentationen.

## Claims

1. Method for configuring a control apparatus (ST) for a motor vehicle, in which
- a respective representation of signals (SIG) from the control apparatus (ST) is provided for selection and a completed selection is predetermined a predetermined as a predetermined first selection (SIG1) of signals (SIG) from the control apparatus (ST),
- at least two representations of program processes which can be executed concurrently can be generated, wherein at least one of these representations is generated as a respective representation of an operating program process (BPP) and at least one of these representations is generated as a respective representation of a supplementary program process (ZPP) and an access of the at least one supplementary program process (ZPP) is restricted to the predetermined first selection (SIG1) of signals (SIG) from the control apparatus (ST), and
- program code (PROG) which can be executed on the control apparatus (ST) is generated in dependence on the predetermined first selection (SIG1) of signals (SIG) from the control apparatus (ST) and in dependence on the generated at least two representations of program processes which can be executed concurrently.

2. Method according to Claim 1, in which the generating of the program code (PROG) which can be executed on the control apparatus (ST) comprises generating an installation function (INST) for at least one supplementary program (ZP) of a third-party manufacturer, which can be executed in the context of the at least one supplementary program process (ZPP) on the control apparatus (ST), for enabling a subsequent installation of the at least one supplementary program (ZP) by a third party independently of at least one operating program (BP) which can be executed in the context of the at least one operating program process (BPP) on the control apparatus (ST).

3. Method according to one of the preceding claims, in which a cycle time (Z) and/or a priority (P) can be specified for executing the respective supplementary program process (ZPP) and the cycle time (Z) and/or priority (P) specified in each case is allocated to the respective supplementary program process (ZPP) via the respectively associated representation.

4. Method according to one of the preceding claims, in which the control apparatus (ST) comprises in at least one data memory (MEM) at least one common data memory area (SMEM) for storing the predetermined first selection (SIG1) of signals (SIG) from the control apparatus (ST) and the access of the at least one supplementary program process (ZPP) to the at least one data memory (MEM) is restricted to the at least one common data memory area (SMEM).

5. Computer program comprising program instructions which, when executed on a computer, perform the steps according to one of the preceding claims.

6. Computer program according to Claim 5, which is configured on a computer-readable medium.

7. Control apparatus for controlling at least one motor vehicle function in a motor vehicle, which comprises at least one data memory (MEM), a communication manager (KM) and at least one computing device (CPU) and which is designed for
- storing at least one supplementary program (ZP) of a third-party manufacturer in the at least one data memory (MEM) independently of at least one operating program (BP) which is stored in the at least one data memory (MEM), and
- for the concurrent execution of the at least one supplementary program (ZP) by the at least one computing device (CPU) in the context of a supplementary program process (ZPP) in addition to at least one operating program process (BPP), within the context of which the at least one operating program (BP) can be executed, wherein access of the at least one supplementary program process (ZPP) is restricted to a predetermined first selection (SIG1) of signals (SIG) from the control apparatus (ST),
wherein the communication manager (KM) is designed to configure the at least one operating program process (BPP) and the at least one supplementary program process (ZPP) and to configure the signals (SIG) of the control apparatus to which the access of the at least one supplementary program process (ZPP) should be restricted and is designed to generate program code (PROG) executable on the control apparatus (ST), as a function of the predetermined first selection of signals (SIG1) and of the at least two representations generated.

## Revendications

1. Procédé de configuration d'un dispositif de commande (ST) pour un véhicule automobile, dans lequel
- une représentation respective de signaux (SIG) du dispositif de commande (ST) est mise à disposition à des fins de sélection, et une sélection effectuée est prédéfinie en tant que première sélection prédéfinie (SIG1) de signaux (SIG) du dispositif de commande (ST),
- au moins deux représentations de processus de programme exécutables en parallèle peuvent être générées, dans lequel au moins une de ces représentations est générée en tant que représentation respective d'un processus de programme d'exploitation (BPP) et au moins une de ces représentations est générée en tant que représentation respective d'un processus de programme supplémentaire (ZPP), et un accès de l'au moins un processus de programme supplémentaire (ZPP) est limité à la première sélection prédéfinie (SIG1) de signaux (SIG) du dispositif de commande (ST), et
- un code de programme (PROG) exécutable sur le dispositif de commande (ST) est généré en fonction de la première sélection prédéfinie (SIG1) de signaux (SIG) du dispositif de commande (ST) et en fonction des au moins deux représentations générées de processus de programme exécutables en parallèle.

2. Procédé selon la revendication 1, dans lequel la génération du code de programme (PROG) exécutable sur le dispositif de commande (ST) comprend la génération d'une fonction d'installation (INST) pour l'au moins un programme supplémentaire (ZP) d'un fabricant tiers, qui est exécutable dans le cadre d'au moins un processus de programme supplémentaire (ZPP) sur le dispositif de commande (ST), pour permettre l'installation ultérieure de l'au moins un programme supplémentaire (ZP) par un tiers indépendamment d'au moins un programme d'exploitation (BP) qui est exécutable dans le cadre de l'au moins un processus de programme d'exploitation (BPP) sur le dispositif de commande (ST).

3. Procédé selon l'une des revendications précédentes, dans lequel un temps de cycle (Z) et/ou une priorité (P) peut/peuvent être prédéfini(s) pour une exécution du processus de programme supplémentaire (ZPP) respectif et dans lequel le temps de cycle (Z) et/ou la priorité (P) respectivement prédéfini est/sont associé(s) au processus de programme supplémentaire (ZPP) respectif par le biais de la représentation respective correspondante.

4. Procédé selon l'une des revendications précédentes, dans lequel le dispositif de commande (ST) comprend au moins une zone de mémoire de données commune (SMEM) dans au moins une mémoire de données (MEM) pour stocker la première sélection prédéfinie (SIG1) de signaux (SIG) du dispositif de commande (ST) et dans lequel l'accès de l'au moins un processus de programme supplémentaire (ZPP) à l'au moins une mémoire de données (MEM) est limité à l'au moins une zone de mémoire de données commune (SMEM).

5. Programme d'ordinateur comprenant des instructions de programme qui, lorsqu'elles sont exécutées sur un ordinateur, mettent en oeuvre les étapes selon l'une des revendications précédentes.

6. Programme d'ordinateur selon la revendication 5, qui est mis en oeuvre sur un support lisible par ordinateur.

7. Dispositif de commande pour commander au moins une fonction de véhicule automobile dans un véhicule automobile, comprenant au moins une mémoire de données (MEM), un gestionnaire de communication (KM) et au moins un dispositif de calcul (CPU) et qui est conçu
- pour le stockage d'au moins un programme supplémentaire (ZP) d'un fabricant tiers dans l'au moins une mémoire de données (MEM) indépendamment d'au moins un programme d'exploitation (BP) qui est stocké dans l'au moins une mémoire de données (MEM), et
- pour l'exécution en parallèle d'au moins un programme supplémentaire (ZP) par l'au moins un dispositif de calcul (CPU) dans le cadre d'un processus de programme supplémentaire (ZPP) en plus d'au moins un processus de programme d'exploitation (BPP), dans le cadre duquel l'au moins un programme d'exploitation (BP) peut être exécuté, dans lequel un accès de l'au moins un processus de programme supplémentaire (ZPP) est limité à une première sélection prédéfinie (SIG1) de signaux (SIG) du dispositif de commande (ST),
dans lequel le gestionnaire de communication (KM) est conçu pour configurer l'au moins un processus de programme d'exploitation (BPP) et l'au moins un processus de programme supplémentaire (ZPP) et les signaux (SIG) du dispositif de commande auquel l'accès de l'au moins un processus de programme supplémentaire (ZPP) doit être limité et est conçu pour générer un code de programme (PROG) exécutable sur le dispositif de commande (ST) en fonction de la première sélection prédéfinie de signaux (SIG1) et des au moins deux représentations générées.
